# EUROPÄISCHE PATENTSCHRIFT

(11) **EP 2 730 396 B1**
(45) Veröffentlichungstag und Bekanntmachung des Hinweises auf die Patenterteilung: **17.01.2018**
(21) Anmeldenummer: 13192113.2
(22) Anmeldetag: 08.11.2013
(51) Int. Cl.: B29C 70/48, B29C 33/64, B32B 17/04, B29C 37/00, B29C 70/08, B29C 33/68, B29C 69/00, B29L 31/30

(54) **Verfahren zur Herstellung eines Kunststoffformteils, welches aus einer Faserverbundkunststoffschicht und einer Oberflächenbeschichtung aus Kunststoff besteht**
Process for manufacturing a molded part comprising a layer made of a fibre composite plastic layer and a surface coating consisting of a moulded plastic component
Procédé de fabrication d'une pièce moulée en matière synthétique constituée d'une couche de matière synthétique en fibres composites et d'un revêtement de surface en matière synthétique

(30) Priorität: 08.11.2012 DE 102012021869
(43) Veröffentlichungstag der Anmeldung: 14.05.2014
(73) Patentinhaber: Volkswagen Aktiengesellschaft, 38440 Wolfsburg (DE)
(72) Erfinder: Bitterlich Maurice, 38527 Meine (DE); Fiedler Thomas, 38102 Braunschweig (DE); Jösch Moritz, 38524 Sassenburg (DE); Kawala Tomek, 36251 Bad Hersfeld (DE); Thomas Joachim, 99817 Eisenach (DE); Schlichting Gerhard, 99976 Lengenfeld untern Stein (DE)

(56) Entgegenhaltungen:
- WO-A1-2011/027074
- WO-A1-2012/088569
- FR-A1- 2 901 730
- GB-A- 2 229 392
- GB-A- 2 432 336

## Beschreibung

Die Erfindung betrifft ein Verfahren zur Herstellung eines aus einer Faserverbundkunststoffschicht und einer Oberflächenbeschichtung aus Kunststoff bestehenden Kunststoffformteils, insbesondere eines Karosseriebauteils eines Kraftfahrzeug, in einem einzigen Werkzeug, welches zumindest zwei relativ zueinander bewegliche und einen Formhohlraum begrenzende Werkzeugteile aufweist.

Bei der Herstellung von Faser-Kunststoff-Verbunden (FKV) werden festigkeits- und steifigkeitsbestimmende Verstärkungsfasern in duroplastische oder thermoplastische Kunststoffe, der sogenannten Matrix, eingebettet. Ein industrialisierbares Verfahren zur Herstellung von FKV-Bauteilen ist das Resin Transfer Moulding (RTM). Im RTM-Verfahren werden textile Halbzeuge mit Verstärkungsfasern in ein Werkzeug eingelegt, welches anschließend im geschlossenen Zustand mit dem Matrixmaterial gefüllt wird. Während dieser Füllung erfolgt die Tränkung der Verstärkungsfasern des Faserhalbzeugs mit dem Matrixmaterial. Anschließend erfolgt eine Aushärtung des Matrixmaterials unter Zufuhr von Wärme und Druck.

Aufgrund der heterogenen werkstofflichen Zusammensetzung aus textilen Verstärkungsfasern und Kunststoffmatrix mit jeweils unterschiedlichen physikalischen Eigenschaften und aufgrund der Einflüsse während der Verarbeitung unterscheiden sich die Oberflächen von FKV-Bauteilen von den Oberflächen der in der Regel homogenen isotropen metallischen Bauteile. Bei den FKV-Bauteilen bildet sich während der Herstellung, insbesondere während der Aushärtung des Bauteils, eine wellige Oberfläche mit Faserabzeichnungen und Mikropörösitäten aus.

Damit die hergestellten FKV-Bauteile als Karosserieaußenhaut für ein Kraftfahrzeug zusammen mit Außenhautbauteilen aus herkömmlichen Materialien, wie beispielsweise Blech, eingesetzt werden können, müssen die FKV-Bauteile nach der Lackierung im Vergleich zu angrenzenden lackierten Karosseriebauteilen aus Blech eine weitestgehend identische Oberflächenerscheinung, insbesondere im Hinblick auf die Welligkeit, den Glanz und den Farbeindruck, aufweisen. Grundvoraussetzung für eine fehlerfreie Lackierung der FKV-Bauteile ist jedoch eine glatte, vollkommen geschlossene Oberfläche, frei von Wellen, Faserabzeichnungen und Mikroporösitäten.

Bisher wurden die Mikroporösitäten und Faserabzeichnungen in der Oberfläche der FKV-Bauteile durch zusätzliche, dem Herstellungsprozess nachgelagerte Schleifarbeiten beseitigt. Alternativ wurde versucht, die Problematik durch die Erzeugung entsprechend hoher Lackschichtdicken in den Griff zu bekommen. Diese Maßnahmen sind jedoch mit einem erheblichen Material-, Arbeits- und Kostenaufwand verbunden und daher für.den Großserieneinsatz nur bedingt geeignet.

Zum Lackieren oder Primern von FKV-Bauteilen werden in der Praxis Beschichtungsverfahren, beispielsweise das In-Mould-Coating-Verfahren (IMC), eingesetzt. Beim IMC-Verfahren werden ein Beschichtungswerkstoff bzw. ein Lacksystem und ein zuvor hergestellter Trägerkörper zusammen in einem Werkzeug angeordnet und miteinander verbunden. Hierbei ergeben sich allerdings Einschränkungen, insbesondere dann, wenn zur Erzeugung von Bauteilen mit einem Hinterschnitt der Einsatz von beweglichen Schiebern erforderlich ist. Besonders bei niederviskosen Beschichtungswerkstoffen erzeugen die Übergänge zwischen den Schiebern und angrenzenden, den Formhohlraum begrenzenden Werkzeugteilen Markierungen oder Fahnen, welche dazu führen, dass sich der Beschichtungswerkstoff nicht vollflächig bzw. nur ungleichmäßig verteilen kann. Außerdem entstehen in diesen Übergangsbereichen Grate, welche durch entsprechende Nacharbeiten entfernt werden müssen.

Ein Verfahren zum Herstellen eines beschichteten Faserverbundkunststoffbauteils, insbesondere eines Verkleidungsteils für einen Kraftwagen, ist bereits aus der DE 10 2008 022 224 A1 bekannt. Hierbei wird zunächst ein Transferlackträger, welcher eine abziehbare Trägerfolie, eine UV-Klarlackschicht und eine pigmentierte Haftschicht umfasst, in eine Form eingelegt. Anschließend wird ein harzgetränktes Trägermaterial, beispielsweise ein Prepreg, oder ein imprägniertes Roving auf der Oberfläche der pigmentierten Haftschicht aufgebracht und dort durch Pressen ausgehärtet.

Ein sehr ähnliches Verfahren zur Herstellung eines beschichteten Faserverbundkunststoffbauteils für ein Kraftfahrzeug beschreibt auch die US 2005/0227080 A1. Hierbei wird der Beschichtungswerkstoff in Form einer vorgeformten Folie in das Werkzeug eingelegt und anschließend mit einem ebenfalls in der Form angeordneten harzgetränkten Faserhalbzeug durch Pressen zu dem beschichteten Faserverbundkunststoffbauteil geformt.

Aus der DE 10 2009 060 554 A1 ist ein Verfahren zum Herstellen von Formteilen aus Kunststoff, insbesondere aus einem Faserverbundwerkstoff, in einer mehrere Formwerkzeuge aufweisenden, kontinuierlich arbeitenden Presse bekannt. Durch das Verfahren können auch beschichtete Formteile hergestellt werden, wobei einerseits ein aushärtbares Harz und andererseits ein Lack oder eine Lackschicht in das Formwerkzeug eingebracht werden.
Die DE 103 38 109 A1 beschreibt ein Verfahren zur Herstellung eines Formteils aus Kunststoff, bestehend aus einem thermoplastischen Kunststoffmaterial und einem Verbundmaterial in einer Pressform. Dabei wird zunächst das Verbundmaterial in der Pressform gefügt und anschließend das ebenfalls in der Pressform angeordnete thermoplastische Kunststoffmaterial durch einen Hochdruckstempel unter einem hohen Druck in einen fließfähigen Zustand gebracht, wobei das thermoplastische Kunststoffmaterial und das Verbundmaterial in der Presse miteinander verpresst werden.
Aus der Schrift GB 2 432 336 A ist ein weiteres Verfahren zur Herstellung eines Formteiles aus Kunststoff bekannt, bei dem ein Verbundmaterial in eine Pressform eingefüllt wird. Dabei ergibt sich auch dort das Problem, dass das Verbundmaterial direkt an den Oberflächen der gegenüberliegenden Werkzeuge anliegt, was eine unzureichende Oberflächenqualität an der Werkstückoberfläche zur Folge hat.
Vor diesem Hintergrund liegt der Erfindung die Aufgabe zugrunde, ein wirtschaftliches Verfahren zur Herstellung von hochwertigen Kunststoffformteilen, insbesondere von lackierten oder lackierfähigen Karosseriebauteilen, zur Verfügung zu stellen. Dabei soll insbesondere der Material-, Arbeits- und Kostenaufwand minimiert werden. Außerdem soll das Verfahren für den Großserieneinsatz geeignet sein.
Diese Aufgabe wird gelöst mit einem Verfahren gemäß den Merkmalen des Patentanspruchs 1. Die Unteransprüche betreffen besonders zweckmäßige Weiterbildungen der Erfindung. Erfindungsgemäß ist also ein Verfahren zur Herstellung eines aus einer Faserverbundkunststoffschicht und einer Oberflächenbeschichtung aus Kunststoff bestehenden Kunststoffformteils, insbesondere eines Karosseriebauteils eines Kraftfahrzeugs, vorgesehen, welches die folgenden Verfahrensschritte umfasst:
a. Eine, vorzugsweise aus einem Silikonmaterial bestehende, flexible Matte wird derart auf einer Oberfläche eines ersten Werkzeugteils angeordnet, dass diese eine Oberfläche des ersten Werkzeugteils zumindest in einem den Formhohlraum begrenzenden Bereich vollflächig anliegend bedeckt;
b. ein Faserhalbzeug aus Verstärkungsfasern wird derart in den Formhohlraum des Werkzeugs eingebracht, dass es zwischen der flexiblen Matte und dem zweiten Werkzeugteil angeordnet ist;
c. der Formhohlraum des Werkzeugs wird mit einer fließfähigen Kunststoffmatrix befüllt, wobei die Kunststoffmatrix in einen Bereich zwischen der flexiblen Matte und dem zweiten Werkzeugteil eingefüllt wird, in welchem auch das Faserhalbzeug angeordnet ist;
d. das Faserhalbzeug und die Kunststoffmatrix härten unter Bildung der Faserverbundkunststoffschicht im Formhohlraum des Werkzeugs zumindest teilweise aus;
e. eine fließfähige Kunststoffformmasse wird derart in den Formhohlraum des Werkzeugs eingefüllt, dass sich zwischen der zumindest teilweise ausgehärteten Faserverbundkunststoffschicht und der flexiblen Matte eine vollflächig an der flexiblen Matte anliegende Kunststoffschicht bildet;
f. die Kunststoffschicht härtet unter Bildung der Oberflächenbeschichtung im Formhohlraum des Werkzeugs aus, wobei die Oberflächenbeschichtung vollflächig an der Matte anliegt und sich unter Bildung des Kunststoffformteils zumindest abschnittsweise stoffschlüssig mit der Faserverbundkunststoffschicht verbindet;
g. das aus der Faserverbundkunststoffschicht und der Oberflächenbeschichtung bestehende Kunststoffformteil wird aus dem Formhohlraum des Werkzeugs entnommen.

Durch das erfindungsgemäße Verfahren werden also in einem einzigen Werkzeug sowohl die Faserverbundkunststoffschicht als auch die lackierfähige Oberflächenbeschichtung hergestellt. Gleichzeitig werden die Faserverbundkunststoffschicht und die Oberflächenbeschichtung auch stoffschlüssig miteinander verbunden. Durch den Einsatz der flexiblen Matte weist die Oberflächenbeschichtung eine besonders glatte, gleichmäßige und vollständig geschlossene lackierfähige Oberfläche auf, frei von Faserabzeichnungen, Wellen oder Mikroporösitäten. Hierdurch wird die Qualitätsanmutung des Kunststoffformteils erhöht. Auch eventuelle Beschädigungen in dem formgebenden Bereich des ersten Werkzeugteils, wie beispielsweise Kratzer oder ähnliche Fehlstellen, werden durch die Zwischenschaltung der Matte nicht in dem Kunststoffformteil bzw. in der Oberflächenbeschichtung abgebildet. Hierdurch wird der Wartungsaufwand in Bezug auf die Werkzeugteile minimiert, da die Fehlstellen und Kratzer in dem Werkzeug nicht durch Schleifen und/oder Polieren entfernt werden müssen. Außerdem sind die im Stand der Technik erforderlichen und dem Herstellungsprozess nachgelagerten Schleifarbeiten zur Beseitigung von Unebenheiten, Wellen, Faserabzeichnungen und Mikroporösitäten nicht mehr erforderlich. Ein Aufbringen von hohen Lackschichtdicken ist somit ebenfalls nicht notwendig.

Die mit dem erfindungsgemäßen Verfahren hergestellten Kunststoffformteile mit einer Faserverbundkunststoffschicht und einer lackierfähigen bzw. lackierten Oberflächenbeschichtung können auch als Karosserieaußenhaut für ein Kraftfahrzeug zusammen mit lackierten Außenhautbauteilen aus Blech eingesetzt werden, da sie im Hinblick auf Welligkeit, Glanz und Farbeindruck eine weitestgehend identische Oberflächenerscheinung wie die Blechbauteile aufweisen.

Durch die Herstellung des Kunststoffformteils in einem einzigen Werkzeug und das damit verbundene gemeinsame Aushärten der Faserverbundkunststoffschicht und der Oberflächenbeschichtung verbessert sich die Haftung bzw. die Verbindung zwischen den beiden Materialien und die Zykluszeit des Verfahrens verringert sich.

Zusammenfassend ergibt sich, dass durch die Erfindung ein wirtschaftliches und für den Großserieneinsatz geeignetes automatisierbares Verfahren zur Herstellung von hochwertigen Kunststoffforniteilen, insbesondere von lackierfähigen Karosseriebauteilen, zur Verfügung gestellt werden kann. Dabei wird insbesondere auch der Material-, Arbeits- und Kostenaufwand minimiert, da die Herstellung in einem einzigen Werkzeug erfolgt und ein Schleifen und Füllern der Bauteile als Lackiervorbehandlung nicht erforderlich ist. Gleichzeitig können die Prozesssicherheit erhöht und die Ausschussquote im Lackierprozess verringert werden.

Eine vorteilhafte Ausgestaltung des vorliegenden erfindungsgemäßen Verfahrens sieht vor, dass die beiden Werkzeugteile vor dem Einfüllen der Kunststoffformmasse in den Formhohlraum derart relativ zueinander bewegt werden, dass sich ein Spalt zwischen der Matte und der zumindest teilweise ausgehärteten Faserverbundkunststoffschicht ausbildet, in welchen dann die Kunststoffformmasse eingefüllt wird, wobei die beiden Werkzeugteile anschließend derart relativ zueinander bewegt werden, dass sich die eingefüllte Kunststoffformmasse durch den aufgebrachten Druck gleichmäßig und die Kunststoffschicht bildend auf einer der Matte zugewandten Oberfläche der Faserverbundkunststoffschicht verteilt. Hierdurch können eine gleichmäßige Verteilung der Kunststoffformmasse erreicht und eine gleichmäßige Dicke der Oberflächenbeschichtung über die gesamte Oberfläche der Faserverbundkunststoffschicht gewährleistet werden. Durch das vorherige Öffnen des Werkzeugs und die Erzeugung des Spalts kann die Kunststoffformmasse unter einem geringen Druck in den Formhohlraum bzw. in den Spalt eingespritzt werden.

Eine alternative Variante des Verfahrens wird auch dadurch erreicht, dass. die Kunststoffformmasse unter Hochdruck in den Formhohlraum eingefüllt wird, wobei sich die beiden Werkzeugteile durch den ansteigenden Druck derart relativ zueinander bewegen, dass sich zwischen der Matte und der Faserverbundkunststoffschicht ein Spalt ausbildet, in welchen dann die Kunststoffformmasse hineinfließt und sich gleichmäßig und die Kunststoffschicht bildend auf einer der Matte zugewandten Oberfläche der Faserverbundkunststoffschicht verteilt. Hierbei erzeugt die unter Hochdruck eingespritzte Kunststoffformmasse in der noch nicht vollständig ausgehärteten Faserverbundkunststoffschicht eine dellenartige Ausnehmung. Durch die weitere Zuführung von Kunststoffformmasse erhöht sich der Innendruck in dem Formhohlraum, bis dieser den Pressdruck der beiden Werkzeugteile überschreitet und so das Werkzeug öffnet. Sobald ein Spalt entsteht, fließt das Material in diesen hinein. Wird die Zufuhr von Kunststoffformmasse gestoppt, sinkt der Innendruck im Werkzeug und durch den anliegenden Pressdruck werden die Werkzeugteile aufeinander zubewegt und die Kunststoffformmasse wird gleichmäßig auf der Oberfläche der Faserverbundkunststoffschicht verteilt.

Eine andere besonders zweckmäßige Weiterbildung des vorliegenden erfindungsgemäßen Herstellungsverfahrens wird auch dadurch erreicht, dass die flexible Matte derart auf dem ersten Werkzeugteil angeordnet wird, dass diese zumindest einen Übergangsbereich zwischen dem ersten Werkzeugteil und einem angrenzenden, relativ zum ersten Werkzeugteil beweglichen Werkzeugelement, insbesondere einem Schieber, bedeckt. Hierdurch können auch solche Bauteilkonturen durch das erfindungsgemäße Verfahren hergestellt werden, welche den Einsatz eines oder mehrerer Schieber erfordern, beispielsweise Bauteile mit einem Hinterschnitt. Die flexible Matte gewährleistet, dass sich im Bereich der Übergänge zwischen dem ersten Werkzeugteil und dem beweglichen Schieber keine Materialanhäufungen wie Markierungen oder Fahnen bilden, sodass eine gleichmäßige Verteilung der Kunststoffformmasse auf der Faserverbundkunststoffschicht gewährleistet werden kann. Gleichzeitig wird durch die Matte verhindert, dass sich im Kunststoffformteil ein Grat ausbildet, welcher eine intensive Nachbearbeitung durch Schleifen erfordern würde.

Dabei erweist es sich als besonders vorteilhaft, wenn die flexible Matte lösbar an dem ersten Werkzeugteil fixiert wird. Hierdurch wird einerseits die Prozesssicherheit des Verfahrens gewährleistet, da sich die Matte während des Verfahrens nicht relativ zu dem Werkzeugteil bewegen kann. Andererseits können durch die Fixierung der Matte auch keine die Oberfläche der Oberflächenbeschichtung beeinträchtigenden Falten, Dellen oder andere unerwünschte Unebenheiten entstehen. Dabei kann die Matte partiell, beispielsweise in den Randbereichen des Werkzeugteils, oder vollflächig an dem Werkzeugteil fixiert sein. Durch die Lösbarkeit der Fixierung wird eine Möglichkeit geschaffen, die Matte bei einer Beschädigung oder bei Verschleiß gegen eine neue Matte auszutauschen.

Eine besonders zweckmäßige Ausgestaltung des Verfahrens wird auch dadurch erreicht, dass die flexible Matte mit einem Unterdruck beaufschlagt wird, welcher die Matte an der Oberfläche des ersten Werkzeugteils fixiert. Hierbei sind außer der Unterdruckquelle keine weiteren Fixiermittel zur Befestigung der Matte an dem Werkzeugteil erforderlich. Außerdem sorgt der Unterdruck dafür, dass die Matte vollflächig auf der Oberfläche des ersten Werkzeugteils aufliegt.

Außerdem ist vorgesehen, dass die flexible Matte nach der Entformung des hergestellten Kunststoffformteils zur Herstellung von weiteren Kunststoffformteilen in dem Werkzeug verbleibt.

Als besonders praxisnah hat es sich erwiesen, dass eine Matte aus Silikon verwendet wird. Durch die Silikonmatte wird einerseits eine besonders glatte und gleichmäßige Oberfläche der an der Matte anliegenden Kunststoffbeschichtung gewährleistet und andererseits weist diese die erforderliche Flexibilität auf, um vollflächig an der Oberfläche des Formhohlraums bzw. der des Werkzeugteils anzuliegen. Außerdem verhindert das Silikon ein Anhaften bzw. eine stoffschlüssige Verbindung zwischen der Oberflächenbeschichtung und der Matte und gewährleistet dadurch bei der Entformung des Kunststoffformteils aus dem Werkzeug ein zerstörungsfreies Trennen des Kunststoffformteils von der flexiblen Matte.

Erfindungsgemäß ist außerdem vorgesehen, dass die Oberflächenbeschichtung aus einem Lack oder aus einem lackierfähigen Kunststoff oder aus einem Kunststoff mit antibakteriellen, hydrophoben, haftvermittelnden, schalldämmenden oder thermisch isolierenden Eigenschaften besteht. Hierdurch wird ermöglicht, dass durch das Verfahren Bauteile mit lackierfähigen Oberflächen, werkzeugfallende lackierte Bauteile und Bauteile mit funktionalen Oberflächen hergestellt werden können.

Die Erfindung lässt zahlreiche Ausführungsformen zu. Zur weiteren Verdeutlichung ihres Grundprinzips ist eine davon in der Zeichnung dargestellt und wird nachfolgend beschrieben. Diese zeigt in
- Fig. 1: einen Abfolge der einzelnen Verfahrensschritte des erfindungsgemäßen Verfahrens zur Herstellung eines eine Faserverbundkunststoffschicht und eine Oberflächenbeschichtung aus Kunststoff aufweisenden Kunststoffformteils in einer schematischen Darstellung;
- Fig. 2: ein nach dem erfindungsgemäßen Verfahren hergestelltes Kunststoffformteil in einer geschnittenen Darstellung;
- Fig. 3: ein Werkzeug zur Durchführung des erfindungsgemäßen Verfahrens in einer geschnittenen Seitenansicht;
- Fig. 4: die Einzelheit IV aus Figur 3 in einer vergrößerten Darstellung;
- Fig. 5: die Einzelheit V aus Figur 3 in einer vergrößerten Darstellung.

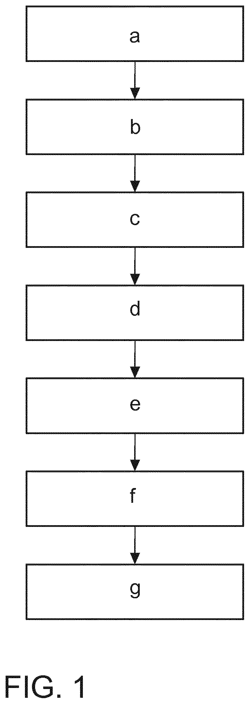

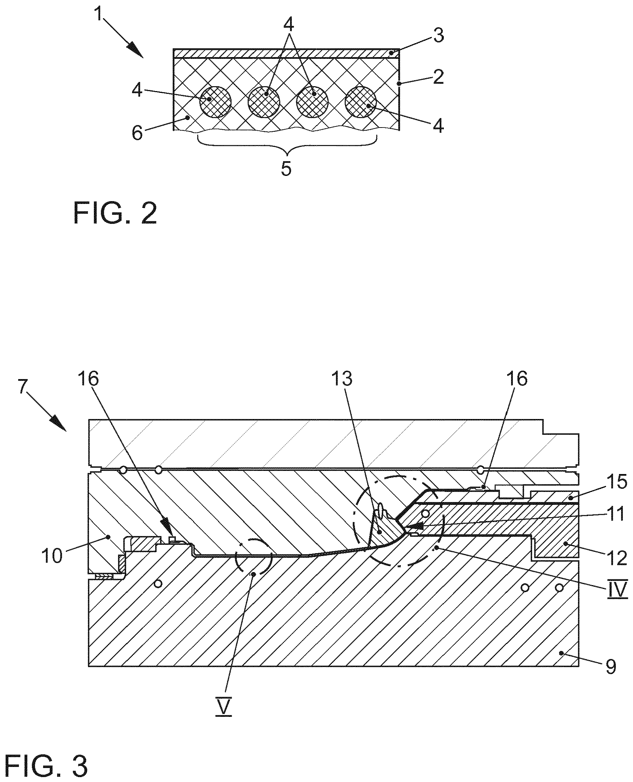

Figur 1 zeigt eine schematische Darstellung einer Abfolge der einzelnen Verfahrensschritte des erfindungsgemäßen Verfahrens zur Herstellung eines in Figur 2 dargestellten Kunststoffformteils 1, welches aus einer Faserverbundkunststoffschicht 2 und einer Oberflächenbeschichtung 3 aus Kunststoff besteht. Die Faserverbundkunststoffschicht 2 weist ein aus Verstärkungsfasern 4 bestehendes Faserhalbzeug 5 auf, welches in einer Kunststoffmatrix 6 eingebettet ist und stoffschlüssig mit der Oberflächenbeschichtung 3 verbunden ist. Die lackierfähige Oberflächenbeschichtung 3 bildet die Sichtseite des beispielsweise als Karosserieaußenhaut ausgebildeten Kunststoffformteils 1. Als Verstärkungsfasern 4 kommen alle gängigen Fasern, wie beispielsweise Kohlefasern, Glasfasern, Keramikfasern, Aramidfasern, Metallfasern oder Naturfasern sowie entsprechende Kombinationen in Betracht. Die Fasern liegen bevorzugt als Faserhalbzeug 5, beispielsweise als geformte Fasermatte vor, können jedoch auch lose vorliegen. Die Kunststoffmatrix 6 kann aus einem thermoplastischen oder duroplastischen Harz und einem Härter bestehen.

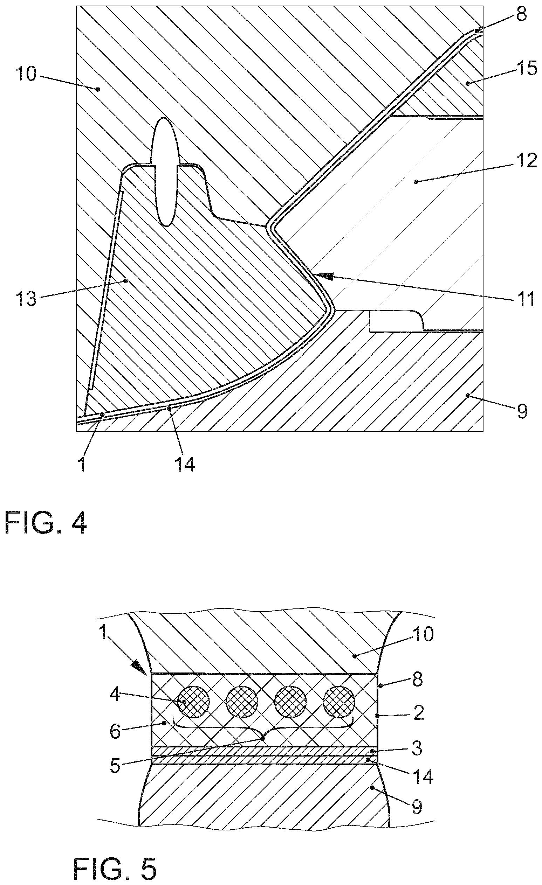

Zur Herstellung des Kunststoffformteils 1 bzw. zur Durchführung des erfindungsgemäßen Verfahrens ist ein in Figur 3 dargestelltes Werkzeug 7 vorgesehen, wobei Figur 4 die Einzelheit IV und Figur 5 die Einzelheit V aus Figur 3 jeweils in einer vergrößerten Darstellung zeigen. Das Werkzeug 7 weist zwei relativ zueinander bewegliche und einen Formhohlraum 8 begrenzende Werkzeugteile 9, 10 auf, nämlich ein Werkzeugunterteil 9 und ein Werkzeugoberteil 10. Um auch Kunststoffformteile 1 mit einem Hinterschnitt 11 erzeugen zu können, sind mehrere als bewegliche Schieber ausgebildete Werkzeugelemente 12, 13 vorgesehen.

Die Figuren 3, 4 und 5 zeigen das Werkzeug 7 mit einem in dem Formhohlraum 8 angeordneten und nach dem erfindungsgemäßen Verfahren hergestellten Kunststoffformteil 1 und zwar kurz vor der Entformung des Kunststoffformteils 1 aus dem Werkzeug 7. Das hergestellte und bereits ausgehärtete Kunststoffformteil 1 liegt dabei, wie insbesondere in Figur 5 gut zu erkennen ist, mit der ausgehärteten Oberflächenbeschichtung 3 an einer Oberfläche der flexiblen Matte 14 an. Die Matte 14 liegt vollflächig an den Oberflächen des Werkzeugunterteils 9, des angrenzenden beweglichen Werkzeugelements 12 und eines weiteren Werkzeugsegments 15 an (siehe Figur 4). Die beispielsweise aus Silikon bestehende flexible Matte 14 ist über Fixierelemente 16 lösbar am Werkzeugunterteil 9 und am Werkzeugsegment 15 fixiert.

Nachfolgend wird das erfindungsgemäße Verfahren zur Herstellung des Kunststoffformteils 1 anhand der in Figur 1 dargestellten schematischen Abfolge der Verfahrensschritte näher erläutert.

Zunächst wird die flexible Matte 14 derart auf einer Oberfläche des ersten Werkzeugteils 9 bzw. des Werkzeugunterteils 9, dem angrenzenden beweglichen Werkzeugelement 12 und dem Werkzeugsegment 15 angeordnet, dass der gesamte den Formhohlraum 8 begrenzende Bereich,insbesondere auch die Übergangsbereiche zwischen dem als Schieber ausgebildeten Werkzeugelement 12 und den beiden angrenzenden Werkzeugbauteilen 9, 15 von der Matte 14 bedeckt ist (Verfahrensschritt a). Hierbei wird die Matte 14 am Werkzeugunterteil 9 und dem weiteren Werkzeugsegment 15 durch Fixierelemente 16 lösbar fixiert. Die als Schieber ausgebildeten Werkzeugelemente 12, 13 sind zur Herstellung eines Kunststoffformteils 1 mit einem Hinterschnitt 11 unbedingt erforderlich und sind in dieser Phase des Verfahrens wie in den Figuren 3 und 4 dargestellt angeordnet.

Im Anschluss daran wird dann das Faserhalbzeug 5 aus Verstärkungsfasern 4 im Bereich des Formhohlraums 8 auf das Werkzeugunterteil 9 bzw. auf die flexible Matte 14 abgelegt. Anschließend wird der Formhohlraum 8 durch eine Relativbewegung zwischen dem Werkzeugoberteil 10 und dem Werkzeugunterteil 9 geschlossen, sodass sich das Faserhalbzeug 5 im Formhohlraum 8 befindet, und zwar zwischen der flexiblen Matte 14 und dem Werkzeugoberteil 10 (Verfahrensschritt b).

Während des nachfolgenden Verfahrensschritts (c) wird der Formhohlraum 8 des Werkzeugs 7 mit einer fließfähigen Kunststoffmatrix 6 befüllt. Dabei wird die Kunststoffmatrix 6 in den Bereich zwischen der flexiblen Matte 14 und dem Werkzeugoberteil 10 eingefüllt, in welchem auch das Faserhalbzeug 5 angeordnet ist, sodass dieses mit der fließfähigen Kunststoffmatrix 6 getränkt wird.

Anschließend härten das Faserhalbzeug 5 und die Kunststoffmatrix 6 unter Bildung der Faserverbundkunststoffschicht 2 im geschlossenen Formhohlraum 8 des Werkzeugs 7 aus (Verfahrensschritt d). Das Aushärten erfolgt nicht nur durch den Härter in der Kunststoffmatrix 6, sondern auch durch die Zufuhr von Wärme bzw. durch das Aufbringen eines entsprechenden Drucks. Hierfür können die beiden Werkzeugteile 9, 10 gegeneinander verspannt werden.

Nach dem Aushärten der Faserverbundkunststoffschicht 2 wird eine fließfähige Kunststoffformmasse derart in den Formhohlraum 8 des Werkzeugs 7 eingefüllt, dass sich zwischen der ausgehärteten Faserverbundkunststoffschicht 2 und der flexiblen Matte 14 eine vollflächig an der flexiblen Matte 14 anliegende Kunststoffschicht bildet (Verfahrensschritt e). Die Kunststoffschicht härtet dann anschließend unter Bildung der Oberflächenbeschichtung 3 im geschlossenen Formhohlraum 8 des Werkzeugs 7 aus. Dabei legt sich die Oberflächenbeschichtung 3 vollflächig an die Oberfläche der Matte 14 an und verbindet sich unter Bildung des Kunststoffformteils 1 stoffschlüssig mit der Faserverbundkunststoffschicht 2 (Verfahrensschritt f).

Zum Abschluss des erfindungsgemäßen Verfahrens wird dann das ausgehärtete und aus der Faserverbundkunststoffschicht 2 und der Oberflächenbeschichtung 3 bestehende Kunststoffformteil 1 aus dem Formhohlraum 8 des Werkzeugs 7 entnommen. Hierbei werden die beiden als Schieber ausgebildeten Werkzeugelemente 12, 13 relativ zu dem Werkzeugunterteil 9 bzw. dem Werkzeugoberteil 10 verfahren und das Werkzeug 7 wird durch eine Bewegung des Werkzeugoberteils 10 geöffnet, sodass das fertige Kunststoffformteil 1 aus dem Werkzeug 7 bzw. aus dem Formhohlraum 8 entnommen werden kann (Verfahrensschritt g).

Das Einbringen der die Oberflächenbeschichtung 3 bildenden Kunststoffformmasse in den Formhohlraum 8 (Verfahrensschritt e) kann dabei durch zwei Alternativen erfolgen:

Bei der ersten Alternative werden das Werkzeugunterteil 9 und das Werkzeugoberteil 10 vor dem Einfüllen der Kunststoffformmasse in den Formhohlraum 8 relativ zueinander bewegt, bis sich ein Spalt zwischen der Matte 14 und der zumindest teilweise ausgehärteten Faserverbundkunststoffschicht 2 ausbildet. In diesen Spalt wird dann die Kunststoffformmasse unter einem geringen Druck eingespritzt. Im Anschluss werden die beiden Werkzeugteile 9, 10 wieder derart aufeinander zubewegt, dass sich die eingefüllte Kunststoffformmasse durch den entstehenden Druck gleichmäßig und die Kunststoffschicht bildend auf einer der Matte 14 zugewandten Oberfläche der Faserverbundkunststoffschicht 2 verteilt.

Bei der zweiten Alternative wird die Kunststoffformmasse unter Hochdruck in den Formhohlraum 8 eingefüllt, wobei sich die beiden Werkzeugteile 9, 10 durch den ansteigenden Druck derart relativ zueinander bewegen, dass sich zwischen der Matte 14 und der Faserverbundkunststoffschicht 2 ein Spalt ausbildet, in welchen dann die Kunststoffformmasse hineinfließt und sich gleichmäßig und die Kunststoffschicht bildend auf einer der Matte 14 zugewandten Oberfläche der Faserverbundkunststoffschicht 2 verteilt.

### Bezugszeichenliste

- 1: Kunststoffformteil
- 2: Faserverbundkunststoffschicht
- 3: Oberflächenbeschichtung
- 4: Verstärkungsfasern
- 5: Faserhalbzeug

- 6: Kunststoffmatrix
- 7: Werkzeug
- 8: Formhohlraum
- 9: Werkzeugteil
- 10: Werkzeugteil

- 11: Hinterschnitt
- 12: Werkzeugelement
- 13: Werkzeugelement
- 14: Matte
- 15: Werkzeugsegment

- 16: Fixierelement

## Patentansprüche

1. Verfahren zur Herstellung eines aus einer Faserverbundkunststoffschicht (2) und einer Oberflächenbeschichtung (3) aus Kunststoff bestehenden Kunststoffformteils (1), insbesondere eines Karosseriebauteils eines Kraftfahrzeugs, in einem einzigen Werkzeug (7), welches zumindest zwei relativ zueinander bewegliche und einen Formhohlraum (8) begrenzende Werkzeugteile (9, 10) aufweist, umfassend die folgenden Verfahrensschritte:
a. Eine, vorzugsweise aus einem Silikonmaterial bestehende, flexible Matte (14) wird derart auf einer Oberfläche eines ersten Werkzeugteils (9) angeordnet, dass diese die Oberfläche des ersten Werkzeugteils (9) zumindest in einem den Formhohlraum (8) begrenzenden Bereich vollflächig anliegend bedeckt;
b. ein Faserhalbzeug (5) aus Verstärkungsfasern (4) wird derart in den Formhohlraum (8) des Werkzeugs (7) eingebracht, dass es zwischen der flexiblen Matte (14) und dem zweiten Werkzeugteil (10) angeordnet ist;
c. der Formhohlraum (8) des Werkzeugs (7) wird mit einer fließfähigen Kunststoffmatrix (6) befüllt, wobei die Kunststoffmatrix (6) in einen Bereich zwischen der flexiblen Matte (14) und dem zweiten Werkzeugteil,(10) eingefüllt wird, in welchem auch das Faserhalbzeug (5) angeordnet ist;
d. das Faserhalbzeug (5) und die Kunststoffmatrix (6) härten unter Bildung der Faserverbundkunststoffschicht (2) im Formhohlraum (8) des Werkzeugs (7) zumindest teilweise aus;
e. eine fließfähige Kunststoffformmasse wird derart in den Formhohlraum (8) des Werkzeugs (7) eingefüllt, dass sich zwischen der zumindest teilweise ausgehärteten Faserverbundkunststoffschicht (2) und der flexiblen Matte (14) eine vollflächig an einer Oberfläche der flexiblen Matte (14) anliegende Kunststoffschicht bildet;
f. die Kunststoffschicht härtet unter Bildung der Oberflächenbeschichtung (3) im Formhohlraum (8) des Werkzeugs (7) aus, wobei die Oberflächenbeschichtung (3) vollflächig an der Oberfläche der flexiblen Matte (14) anliegt und sich unter Bildung des Kunststoffformteils (1) zumindest abschnittsweise stoffschlüssig mit der Faserverbundkunststoffschicht (2) verbindet;
g. das aus der Faserverbundkunststoffschicht (2) und der Oberflächenbeschichtung (3) bestehende Kunststoffformteil (1) wird aus dem Formhohlraum (8) des Werkzeugs (7) entnommen.

2. Verfahren nach Anspruch 1, **dadurch gekennzeichnet; dass** die beiden Werkzeugteile (9, 10) vor dem Einfüllen der Kunststoffformmasse in den Formhohlraum (8) derart relativ zueinander bewegt werden, dass sich ein Spalt zwischen der flexiblen Matte (14) und der zumindest teilweise ausgehärteten Faserverbundkunststoffschicht (2) ausbildet, in welchen dann die Kunststoffformmasse eingefüllt wird, wobei die beiden Werkzeugteile (9, 10) anschließend derart relativ zueinander bewegt werden, dass sich die eingefüllte Kunststoffformmasse durch den aufgebrachten Druck gleichmäßig und die Kunststoffschicht bildend auf einer der flexiblen Matte (14) zugewandten Oberfläche der Faserverbundkunststoffschicht (2) verteilt.

3. Verfahren nach Anspruch 1, **dadurch gekennzeichnet, dass** die Kunststoffformmasse unter Hochdruck in den Formhohlraum (8) eingefüllt wird, wobei sich die beiden Werkzeugteile (9, 10) durch den ansteigenden Druck derart relativ zueinander bewegen, dass sich zwischen der flexiblen Matte (14) und der Faserverbundkunststoffschicht (2) ein Spalt ausbildet, in welchen dann die Kunststoffformmasse hineinfließt und sich gleichmäßig und die Kunststoffschicht bildend auf einer der flexiblen Matte (14) zugewandten Oberfläche der Faserverbundkunststoffschicht (2) verteilt.

4. Verfahren nach zumindest einem der vorangehenden Ansprüche, **dadurch gekennzeichnet, dass** die flexible Matte (14) derart auf dem ersten Werkzeugteil (9) angeordnet wird, dass diese zumindest einen Übergangsbereich zwischen dem ersten Werkzeugteil (9) und einem angrenzenden, relativ zum ersten Werkzeugteil (9) beweglichen Werkzeugelement (12), insbesondere einem Schieber, bedeckt.

5. Verfahren nach zumindest einem der vorangehenden Ansprüche, **dadurch gekennzeichnet, dass** die flexible Matte (14) lösbar an dem ersten Werkzeugteil (9) fixiert wird.

6. Verfahren nach zumindest einem der vorangehenden Ansprüche 4 bis 6, **dadurch gekennzeichnet, dass** die flexible Matte (14) mit einem Unterdruck beaufschlagt wird, welcher die flexible Matte (14) an der Oberfläche des ersten Werkzeugteils (9) fixiert.

7. Verfahren nach zumindest einem der vorangehenden Ansprüche, **dadurch gekennzeichnet, dass** die flexible Matte (14) nach der Herstellung des Kunststoffformteils (1) in dem Werkzeug (7) verbleibt.

8. Verfahren nach zumindest einem der vorangehenden Ansprüche, **dadurch gekennzeichnet, dass** eine flexible Matte (14) aus Silikon verwendet wird.

9. Verfahren nach zumindest einem der vorangehenden Ansprüche, **dadurch gekennzeichnet dass** die Oberflächenbeschichtung (3) aus einem Lack oder aus einem lackierfähigen Kunststoff oder aus einem Kunststoff mit antibakteriellen, hydrophoben, haftvermittelnden, schalldämmenden oder thermisch isolierenden Eigenschaften besteht.

## Claims

1. Method for producing a plastic moulded part (1) that is composed of a fibre-composite plastic layer (2) and of a surface coating (3) of plastic, in particular a body component of a motor vehicle, in a single tool (7) which has at least two tool parts (9, 10) that are movable in relation to one another and delimit a moulding cavity (8), said method comprising the following method steps:
a) a flexible mat (14) that is preferably composed of a silicone material is disposed on a surface of a first tool part (9) in such a manner that said mat (14) covers the surface of the first tool part (9) so as to bear on the entire area at least in a region that delimits the moulding cavity (8);
b) a fibrous semi-finished product (5) from reinforcing fibres (4) is incorporated into the moulding cavity (8) of the tool (7) in such a manner that said fibrous semi-finished product (5) is disposed between the flexible mat (14) and the second tool part (10);
c) the moulding cavity (8) of the tool (7) is filled with a free-flowing plastic matrix (6), wherein the plastic matrix (6) is filled into a region between the flexible mat (14) and the second tool part (10) in which also the fibrous semi-finished product (5) is disposed;
d) the fibrous semi-finished product (5) and the plastic matrix (6), while forming the fibre-composite plastic layer (2), are at least partially cured in the moulding cavity (8) of the tool (7);
e) a free-flowing plastic moulding compound is filled into the moulding cavity (8) of the tool (7) in such a manner that a plastic layer that bears on the full area of a surface of the flexible mat (14) is formed between the at least partially cured fibre-composite plastic layer (2) and the flexible mat (14);
f) the plastic layer, while forming the surface coating (3), is cured in the moulding cavity (8) of the tool (7), wherein the surface coating (3) bears on the full area of the surface of the flexible mat (14) and, while forming the plastic moulded part (1), at least in portions connects to the fibre-composite plastic layer (2) in a materially integral manner;
g) the plastic moulded part (1) that is composed of the fibre-composite plastic layer (2) and of the surface coating (3) is removed from the moulding cavity (8) of the tool (7).

2. Method according to Claim 1, **characterized in that** the two tool parts (9, 10) prior to the filling of the plastic moulding compound into the moulding cavity (8) are moved in relation to one another in such a manner that a gap is configured between the flexible mat (14) and the at least partially cured fibre-composite plastic layer (2) into which gap the plastic moulding compound is then filled, wherein the two tool parts (9, 10) subsequently are moved in relation to one another in such a manner that the filled plastic moulding compound on account of the applied pressure is distributed uniformly and so as to form the plastic layer on a surface of the fibre-composite plastic layer (2) that faces the flexible mat (14).

3. Method according to Claim 1, **characterized in that** the plastic moulding compound is filled into the moulding cavity (8) under high pressure, wherein the two tool parts (9, 10) on account of the rising pressure are moved in relation to one another in such a manner that a gap into which the plastic moulding compound then flows and is distributed uniformly and so as to form the plastic layer on a surface of the fibre-composite plastic layer (2) that faces the flexible mat (14) is configured between the flexible mat (14) and the fibre-composite plastic layer (2).

4. Method according to at least one of the preceding claims, **characterized in that** the flexible mat (14) is disposed on the first tool part (9) in such a manner that said mat (14) covers at least a transition region between the first tool part (9) and an adjacent tool element (12), in particular a slide, that is movable relative to the first tool part (9).

5. Method according to at least one of the preceding claims, **characterized in that** the flexible mat (14) is releasably fixed to the first tool part (9).

6. Method according to at least one of preceding Claims 4 to 6, **characterized in that** the flexible mat (14) is impinged with negative pressure which fixes the flexible mat (14) to the surface of the first tool part (9).

7. Method according to at least one of the preceding claims, **characterized in that** the flexible mat (14) upon production of the plastic moulded part (1) remains in the tool (7).

8. Method according to at least one of the preceding claims, **characterized in that** a flexible mat (14) from silicone is used.

9. Method according to at least one of the preceding claims, **characterized in that** the surface coating (3) is composed of a lacquer or of a lacquering-capable plastic, or of a plastic having antibacterial, hydrophobic, bonding, sound-damping, or thermally insulating properties.

## Revendications

1. Procédé de fabrication d'une pièce moulée en matière synthétique (1) constituée d'une couche de matière synthétique en fibres composites (2) et d'un revêtement de surface (3) en matière synthétique, en particulier d'un composant de carrosserie d'un véhicule automobile, dans un seul outil (7), qui présente au moins deux parties d'outil (9, 10) mobiles l'une par rapport à l'autre et limitant une cavité de moulage (8), comprenant les étapes de procédé suivantes:
a. on dépose un tapis flexible (14), composé de préférence d'un matériau à base de silicone, sur une surface d'une première partie d'outil (9), de telle manière que celui-ci appliqué sur toute la surface recouvre la surface de la première partie d'outil (9) au moins dans une région limitant la cavité de moulage (8);
b. on introduit une ébauche de fibres (5) composée de fibres de renforcement (4) dans la cavité de moulage (8) de l'outil (7), de telle manière qu'elle soit disposée entre le tapis flexible (14) et la deuxième partie d'outil (10);
c. on remplit la cavité de moulage (8) de l'outil (7) avec une matrice de matière synthétique fluide (6), dans lequel la matrice de matière synthétique (6) est versée dans une région située entre le tapis flexible (14) et la deuxième partie d'outil (10), dans laquelle l'ébauche de fibres (5) est également disposée;
d. on laisse durcir au moins en partie l'ébauche de fibres (5) et la matrice de matière synthétique (6) avec formation de la couche de matière synthétique en fibres composites (2) dans la cavité de moulage (8) de l'outil (7);
e. on verse une masse de moulage en matière synthétique fluide dans la cavité de moulage (8) de l'outil (7) de telle manière qu'il se forme entre la couche de matière synthétique en fibres composites au moins partiellement durcie (2) et le tapis flexible (14) une couche de matière synthétique appliquée en pleine surface sur une surface du tapis flexible (14);
f. on laisse durcir la couche de matière synthétique avec formation du revêtement de surface (3) dans la cavité de moulage (8) de l'outil (7), dans lequel le revêtement de surface (3) s'applique en pleine surface sur la surface du tapis flexible (14) et se lie matériellement au moins localement à la couche de matière synthétique en fibres composites (2) avec formation de la pièce moulée en matière synthétique (1) ;
g. on retire la pièce moulée en matière synthétique (1) composée de la couche de matière synthétique en fibres composites (2) et du revêtement de surface (3) hors de la cavité de moulage (8) de l'outil (7).

2. Procédé selon la revendication 1, **caractérisé en ce que** l'on déplace les deux parties d'outil (9, 10) l'une par rapport à l'autre avant le versage de la masse de moulage en matière synthétique dans la cavité de moulage (8), de telle manière qu'il se forme entre le tapis flexible (14) et la couche de matière synthétique en fibres composites au moins partiellement durcie (2) une fente dans laquelle on verse ensuite la masse de moulage en matière synthétique, dans lequel on déplace ensuite les deux parties d'outil (9, 10) l'une par rapport à l'autre, de telle manière que la masse de moulage en matière synthétique versée se répartisse uniformément sous la pression appliquée et en formant la couche de matière synthétique sur une surface de la couche de matière synthétique en fibres composites (2) tournée vers le tapis flexible (14).

3. Procédé selon la revendication 1, **caractérisé en ce que** l'on verse la masse de moulage en matière synthétique sous haute pression dans la cavité de moulage (8), dans lequel les deux parties d'outil (9, 10) se déplacent l'une par rapport à l'autre sous la pression croissante, de telle manière qu'il se forme entre le tapis flexible (14) et la couche de matière synthétique en fibres composites (2) une fente dans laquelle ensuite la masse de moulage en matière synthétique s'écoule et se répartit uniformément en formant la couche de matière synthétique sur une surface de la couche de matière synthétique en fibres composites (2) tournée vers le tapis flexible (14).

4. Procédé selon au moins une des revendications précédentes, **caractérisé en ce que** l'on dispose le tapis flexible (14) sur la première partie d'outil (9) de telle manière que celui-ci recouvre au moins une zone de transition entre la première partie d'outil (9) et un élément d'outil (12) adjacent, en particulier un tiroir, mobile par rapport à la première partie d'outil (9).

5. Procédé selon au moins une des revendications précédentes, **caractérisé en ce que** l'on fixe le tapis flexible (14) de façon détachable à la première partie d'outil (9).

6. Procédé selon au moins une des revendications précédentes 4 à 6, **caractérisé en ce que** l'on soumet le tapis flexible (14) à une dépression, qui fixe le tapis flexible (14) à la surface de la première partie d'outil (9).

7. Procédé selon au moins une des revendications précédentes, **caractérisé en ce que** le tapis flexible (14) reste dans l'outil (7) après la fabrication de la pièce moulée en matière synthétique (1).

8. Procédé selon au moins une des revendications précédentes, **caractérisé en ce que** l'on utilise un tapis flexible (14) en silicone.

9. Procédé selon au moins une des revendications précédentes, **caractérisé en ce que** le revêtement de surface (3) se compose d'une laque ou d'une matière synthétique laquable ou d'une matière synthétique possédant des propriétés antibactériennes, hydrophobes, adhésives, insonorisantes ou thermo-isolantes.
